# FASCICULE DE BREVET EUROPEEN

(11) **EP 4 228 908 B1**
(45) Date de publication et mention de la délivrance du brevet: **25.12.2024**
(21) Numéro de dépôt: 21778173.1
(22) Date de dépôt: 02.09.2021
(51) Int. Cl.: B60C 9/00, B60C 9/18, B60C 9/20, B60C 11/03

(54) **PNEUMATIQUE POUR VEHICULE AGRICOLE A SOMMET ALLEGE**
LANDWIRTSCHAFTLICHER FAHRZEUGREIFEN MIT LEICHTGEWICHTIGER KRONE
AGRICULTURAL VEHICLE TYRE WITH LIGHTWEIGHT CROWN

(30) Priorité: 04.09.2020 FR 2008993
(43) Date de publication de la demande: 23.08.2023
(73) Titulaire: COMPAGNIE GENERALE DES ETABLISSEMENTS MICHELIN, 63000 Clermont-Ferrand (FR)
(72) Inventeur: JOHNSON, Philippe, 63040 CLERMONT-FERRAND CEDEX 9 (FR); DIDANE, Nizar, 63040 CLERMONT-FERRAND CEDEX 9 (FR)
(74) Mandataire: M.F.P. Michelin
(86) Numéro de dépôt international: PCT/FR2021/051508
(87) Numéro de publication internationale: WO 2022/049346

(56) Documents cités:
- WO-A1-2019/073143
- WO-A1-2019/073143
- WO-A1-2019/122619
- WO-A1-2019/122619
- WO-A1-2020/128236
- WO-A1-2020/128236
- FR-A1- 3 090 493
- FR-A1- 3 090 493

## Description

La présente invention a pour objet un pneumatique radial pour véhicule agricole dit tracteur de petite ou moyenne puissance, et concerne plus particulièrement son armature de sommet.

Les spécifications dimensionnelles et les conditions d'usage (charge, vitesse, pression) d'un pneumatique pour tracteurs de petite et moyenne puissance sont définies par l'usage. Les pneumatiques sont de moyenne à grande dimension selon le type de culture. Le diamètre des jantes de montage de ces pneumatiques est au moins égal à 28 pouces. Pour les pneumatiques agricoles, la pression de gonflage minimale recommandée correspondant à la capacité de charge indiquée est le plus souvent au plus égale à 300 kPa, mais peut descendre jusqu'à 240 kPa pour un pneumatique IF (Improved Flexion- flexion améliorée), voire 160 kPa pour un pneumatique VF (Very improved Flexion -- flexion très améliorée). Les pneumatiques IF se distinguent des pneus standards dits NF (Normal Flexion - flexion standard), à savoir n'entrant pas dans la classification IF ou VF selon le standard ETRTO 2020 (« European Tire an Rim Technical Organisation » : Organisation Technique Européenne du Pneumatique et de la Roue), de même dimension par une capacité de charge augmentée de 20 % à pression constante ou une pression 20 % plus basse à charge égale et respectivement 40 % avec les pneus VF. L'invention s'intéresse aux pneumatiques Normal Flexion. La vitesse maximale de ces pneumatiques est de 65 Km/h correspondant à l'indice de vitesse D. L'indice de charge de ces pneumatiques est au moins égal à 140 (2500 Kg) et au plus égal à 170 (6000 kg).

Un pneumatique pour véhicule agricole comprend une bande de roulement, destinée à venir en contact avec un sol par l'intermédiaire d'une surface de roulement, dont les deux extrémités axiales sont reliées, par l'intermédiaire de deux flancs, à deux bourrelets assurant la liaison mécanique entre le pneumatique et la jante sur laquelle il est destiné à être monté.

Dans ce qui suit, les directions circonférentielle, axiale et radiale désignent respectivement une direction tangente à la surface de roulement et orientée selon le sens de rotation du pneumatique, une direction parallèle à l'axe de rotation du pneumatique et une direction perpendiculaire à l'axe de rotation du pneumatique.

WO 2019/073143 A1 décrit un pneumatique radial pour véhicule agricole comprenant une armature de renforcement, constituée d'une armature de sommet, radialement intérieure à la bande de roulement, et d'une armature de carcasse, radialement intérieure à l'armature de sommet.

La bande de roulement d'un pneumatique pour véhicule agricole comprend généralement une pluralité d'éléments en relief, appelés éléments de sculpture ou blocs, s'étendant radialement vers l'extérieur à partir d'une surface portante ou fond de sculpture jusqu'à la surface de roulement, et le plus souvent séparés les uns des autres par des creux ou sillons. Ces éléments de sculpture sont le plus souvent des barrettes ayant généralement une forme allongée globalement parallélépipédique, comprenant au moins une portion rectiligne ou curviligne. La dimension des barrettes, à savoir leur hauteur radiale et leur épaisseur circonférentielle est essentielle pour assurer un effort de traction adéquat à l'usage sur un sol meuble.

L'armature de carcasse d'un pneumatique radial pour véhicule agricole comprend au moins une couche de carcasse reliant les deux bourrelets entre eux. Une couche de carcasse comprend des renforts, ou éléments de renforcement, enrobés par un matériau polymérique comprenant un élastomère, obtenu par mélangeage, ou mélange élastomérique. Les renforts de couche de carcasse sont le plus souvent constitués par des matériaux polymériques textiles, tels qu'un polyester, par exemple. Les renforts d'une couche de carcasse sont sensiblement parallèles entre eux et forment, avec la direction circonférentielle, un angle compris entre 85° et 95°.

L'armature de sommet d'un pneumatique radial pour véhicule agricole comprend une superposition de couches de sommet s'étendant circonférentiellement, radialement à l'extérieur de l'armature de carcasse. Chaque couche de sommet est constituée de renforts enrobés par un mélange élastomérique et parallèles entre eux. Lorsque les renforts d'une couche de sommet forment, avec la direction circonférentielle, un angle au plus égal à 10°, ils sont dits circonférentiels, ou sensiblement circonférentiels, et assurent une fonction de frettage limitant les déformations radiales du pneumatique. Lorsque les renforts d'une couche de sommet forment, avec la direction circonférentielle, un angle au moins égal à 10° et le plus souvent au plus égal à 40°, ils sont appelés renforts à angle et ont une fonction de reprise des efforts transversaux, parallèles à la direction axiale, appliqués au pneumatique. Les renforts des couches de sommet peuvent être constitués par des matériaux polymériques textiles, tels qu'un polyester, par exemple, ou par des matériaux métalliques, tels que l'acier.

Un pneumatique pour véhicule agricole est destiné à rouler sur divers types de sols tels que la terre plus ou moins compacte des champs, les chemins non goudronnés d'accès aux champs et les surfaces goudronnées des routes. Compte tenu de la diversité de l'usage, en champ et sur route, un pneumatique pour véhicule agricole doit présenter un compromis de performances entre, de façon non exhaustive, la traction en champ sur sol meuble, la résistance aux arrachements, la résistance à l'usure sur route, la résistance à l'avancement, le confort vibratoire sur route, l'endurance à la fatigue due au nombre de cycles, la masse.

Une des voies de recherche essentielle dans un monde aux ressources limitées est de réduire la masse des produits utilisés pour la fabrication du pneumatique.

Les inventeurs se sont donnés pour objectif de maintenir l'endurance d'une armature de sommet d'un pneumatique agricole jusqu'à un niveau au moins équivalent à celle d'une armature de sommet avec au moins 4 couches de travail d'éléments de renforcement textiles, tout en diminuant le nombre de couches de travail pour diminuer la masse du pneumatique.

Ce but a été atteint par un pneumatique radial pour véhicule de type agricole, NF (« Normal Flexion »), dont, au sens du standard ETRTO 2020 (« European Tire an Rim Technical Organisation »), l'indice de vitesse est au moins égal à D pour une vitesse maximale égale à 65 km/h, destiné à être monté sur une jante de diamètre au moins égal à 28 pouces, et dont l'indice de charge est au moins égal à 140 et au plus égal à 170, comprenant
- Une bande de roulement destinée à venir en contact avec un sol d'une largeur axiale LT et comprenant une partie centrale d'une largeur axiale LT/2 et deux parties axialement extérieures chacune d'une largeur axiale LT/4,
- Les deux parties axialement extérieures comprenant des blocs de sculpture d'une hauteur radiale au moins égale à 45 mm, ces blocs couvrant au moins 80% de la largeur axiale LT/4 des parties axialement extérieures de la bande de roulement et d'une épaisseur circonférentielle ep circonférentielle au moins égale à 42 mm,
- une armature de sommet radialement intérieure à la bande de roulement, comprenant 3 couches de travail, une couche de travail la plus radialement intérieure, une couche de travail la plus radialement extérieure et une couche de travail intermédiaire, chaque couche de travail comprenant des éléments de renforcement textiles en PET (polyéthylène téréphtalate) parallèles entre eux, enrobés d'un matériau caoutchouteux et formant des angles avec une direction circonférentielle du pneumatique au moins égaux à 12° et au plus égaux à 45°
- les éléments de renforcement des couches de travail ayant une résistance à la rupture en traction au moins égale à 32 daN
- les angles (ANT1, ANT3) formés par les éléments de renforcement respectivement de la couche de travail la plus radialement intérieure et de la couche de travail la plus radialement extérieure, avec la direction circonférentielle, étant au plus égaux à 20° et de même orientation,
- l'angle ANT2 formé par les éléments de renforcement de la couche de travail intermédiaire avec la direction circonférentielle étant de signe opposé aux angles ANT1 et ANT3,
- la valeur absolue de l'angle ANT2 étant supérieure à 10° plus la valeur absolue de la moyenne des angles ANT1 et ANT3.

La solution fonctionne particulièrement bien pour des pneumatiques agricoles à blocs ou à barrettes, qui sont de longs blocs de sculpture dont la largeur axiale est proche de la demi-largeur axiale de la bande de roulement. Concevoir une sculpture plus compacte avec des sillons et des blocs de moindre dimension en hauteur radiale notamment, permettrait certainement de trouver une solution plus allégée grâce à un meilleur échange thermique entre les couches de sommet et l'extérieur du pneumatique et en diminuant la flexion du sommet au droit des barrettes. Une telle sculpture permettrait de diminuer les sollicitations mécaniques et thermiques pour l'utilisation de câbles métalliques par exemple mais serait pénalisé en adhérence sur sol meuble.

Les blocs de sculpture des parties axialement extérieures de la bande de roulement des pneumatiques considérés par l'invention, ont une largeur axiale au moins égale à 80% de la largeur axiale des parties axialement extérieures de la bande de roulement, à savoir LT/4, LT étant la largeur axiale de la bande de roulement. Par cela, on entend que la distance axiale de l'extrémité axialement extérieure du bloc de sculpture à son extrémité axialement intérieure est au moins égale à 80% du quart de largeur axiale de la bande de roulement. La largeur axiale sera mesurée, le pneumatique étant neuf, et pour éviter les détails du flancs, les points de mesures seront pris appartenant au bloc et sur sa surface de roulement.

Pour un fonctionnement efficace sur sol meuble et notamment pendant la traction d'outils tels une charrue, la hauteur de sculpture ou hauteur radiale des barrettes ou bloc de sculpture est au moins égale à 45mm.

Pour une résistance adéquate à l'arrachement des éléments de sculpture et une bonne transmission du couple moteur en sol meuble, l'épaisseur circonférentielle des blocs de sculpture ou des barrettes, mesurée à mi-distance entre le fond de sculpture et la surface de roulement et dans le plan circonférentiel passant au centre des parties axialement extérieures de la bande de roulement, est au moins égale à 42 mm. Par ailleurs une solution préférée pour limiter les contraintes thermiques tout en conservant une résistance à l'arrachement des éléments de sculpture pour l'usage des tracteurs de moyenne puissance, est que l'épaisseur circonférentielle de la sculpture soit au plus égale à 80mm. Cette caractéristique géométrique des blocs de sculpture ou des barrettes est la plus pertinente vis-à-vis des fissurations sous des contraintes thermiques des mélanges à proximité des extrémités axiales des couches de sommet. Cette distance circonférentielle est la distance sur laquelle le bloc de sculpture ou la barrette influence le fonctionnement des couches de sommet, par les déformations des couches de sommet qu'elle implique au roulage sur un sol peu déformable et par l'isolement thermique vis-à-vis de l'air extérieur qu'elle génère d'autant que pour l'usage agricole, la hauteur de sculpture est particulièrement élevée.

Dans ces conditions, pour qu'une armature de sommet comprenant moins de 4 couches de sommet ait une endurance équivalente aux armatures de sommet à 4 couches de sommet vendues sur le marché, il est essentiel que les éléments de renforcement des dites couches de sommet aient une force à la rupture au moins égale à 32 daN, mesurée selon la norme désignée D885/D885M - 10A (2014) et qu'ils soient composés d'au moins deux torons de PET dont le comportement en compression protègera le sommet des ruptures.

Dans une configuration à 3 couches de sommet, il est primordial d'équilibrer les angles des éléments de renforcement des trois couches de manière bien particulière. Habituellement sur un sommet à 4 couches de sommet, les couches de sommet sont équilibrées par paires, une paire radialement intérieure et une paire radialement extérieure. Dans chaque paire de couches de sommet, les éléments de renforcement des deux couches sont croisés l'une par rapport à l'autre par rapport au plan circonférentiel médian, les valeurs absolues des angles formés avec la direction circonférentielle étant de même valeur à plus ou moins 3° près. Pour certaines paires, les valeurs absolues des dits angles sont comprises entre 15 et 30° pour reprendre principalement les efforts circonférentiels et d'autres supérieures à 30° avec pour objectif de reprendre des efforts dans le sens transverse.

Certains pneumatiques pour véhicule de tourisme ou poids-lourd ont des configurations à 3 couches de sommet notamment une configuration avec deux couches de sommet adjacentes dont les éléments de renforcement respectifs forment avec la direction circonférentielle, des angles opposés et de valeurs absolues proches associées à une couche de sommet dite de frettage dont les éléments de renforcement forment avec la direction circonférentielle un angle au plus égal à 10°. Cette configuration est totalement inadaptée aux pneumatiques agricoles visés par l'invention. Le travail à basse pression acceptée pour les véhicules agricoles, pour des sculptures de très grandes hauteurs, au moins égales à 30mm, génère pour des couches de frettage des cycles de pression-compression trop importants, pour que cette solution soit efficace.

Une autre configuration à 3 couches de sommet connue dans les pneumatiques essentiellement poids-lourd, mais avec des éléments de renforcement métalliques, associe deux couches de travail adjacentes dont les éléments de renforcement respectifs forment avec la direction circonférentielle, des angles opposés et de valeurs absolues proches, associées à une couche de sommet la plus radialement intérieure dite de triangularisation dont les éléments de renforcement forment avec la direction circonférentielle un angle dont la valeur absolue est au moins égale à 50°. Néanmoins cette solution n'est pas adaptée pour les pneumatiques considérés par l'invention, cette nappe travaillant beaucoup trop en compression pour des éléments de renforcement textile plus adaptés à l'usage agricole, une version métallique à 3 couches de sommet ne faisant qu'alourdir davantage le pneumatique, allant donc à l'encontre de l'objectif de l'invention.

Une solution avec 3 couches de sommet textile serait décalée en performance durabilité pour un usage IF (improved flexion) ou VF (Very Improved Flexion) par rapport aux solutions actuelles.

Il convient donc de trouver un agencement des couches de sommet, des angles et des matériaux permettant de résoudre le problème technique particulier à ce contexte. La solution telle que les angles ANT1, ANT3 formés par des éléments de renforcement respectivement de la couche de travail la plus radialement intérieure et de la couche de travail la plus radialement extérieure avec la direction circonférentielle, soient au plus égaux à 20° et de même orientation, et telle que l'angle ANT2 formé par les éléments de renforcement de la couche de travail médian avec la direction circonférentielle est de signe opposé des angles ANT1 et ANT3 et telle que la valeur absolue de l'angle ANT2 est supérieure à 10° plus la valeur absolue de la moyenne des angles ANT1 et ANT3, permet un très bon équilibre des sollicitations de traction et de compression dans l'ensemble des éléments de renforcement de toutes les couches de sommet. Aucune des couches de sommet n'est trop sollicitée en traction comme avec une couche de frettage ou trop sollicité en compression comme avec une couche de triangularisation. Le fait de positionner la couche centrale croisée avec les deux autres permet un double couplage propice à l'endurance du sommet. Les angles que font les éléments de renforcement des couches de sommet avec la direction circonférentielle, sont mesurés au niveau du plan circonférentiel médian.

Une solution préférée est que les éléments de renforcement des couches de travail soient constitués de deux torons de PET, car ce matériau et cette architecture permettent d'obtenir des éléments de renforcement peu sensibles à la compression et suffisamment de petit diamètre pour gagner en épaisseur des couches de sommet et donc en masse, un toron étant un assemblage de fibres élémentaires.

Pour une bonne résistance aux efforts de compression, il est préféré que chaque toron de PET des éléments de renforcement des couches de travail, ait une masse linéique au moins égale à 320 g par km.

La solution préférée est un pneumatique dans lequel les éléments de renforcement des 3 couches de travail sont des câbles consistant en deux torons de PET d'une masse linéique comprise entre 320 et 360 g par km, et posés selon un pas compris entre 1.2 mm et 1,5 mm. Le pas de pose est la distance mesurée, perpendiculairement à deux éléments de renforcement adjacents d'une couche de travail, entre les deux centres de ces deux éléments de renforcement.

Une solution avantageuse est que la valeur absolue des angles ANT1 et ANT3 est comprise entre 13 et 17° et la valeur absolue de l'angle ANT2 est comprise entre 27° et 33°, de préférence la valeur absolue des angles ANT1 et ANT3 est comprise entre 14,5° et 15,5° et la valeur absolue de l'angle ANT2 est comprise entre 29,5° et 30,5°. Cette configuration a montré un équilibre des différents efforts sur les éléments de renforcement des couches de sommet particulièrement intéressant.

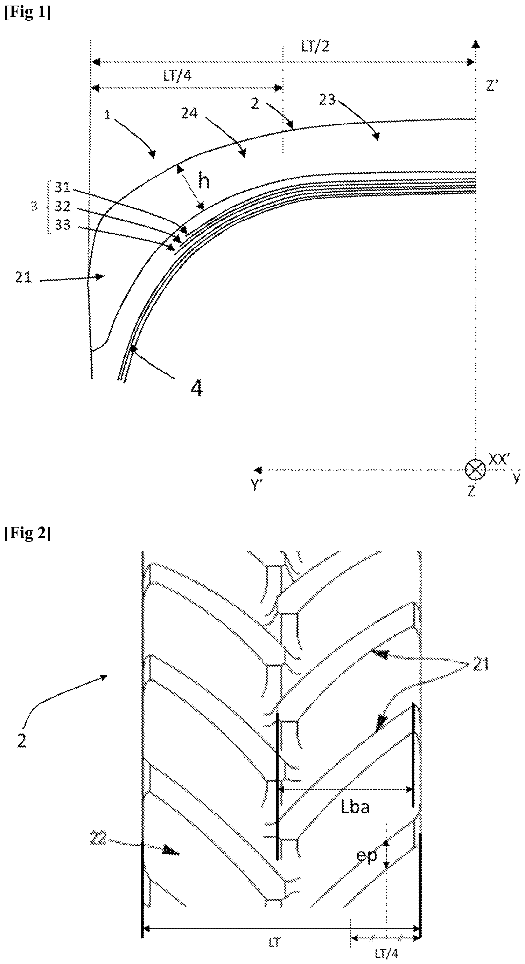

Les caractéristiques de l'invention sont illustrées par les figures 1 et 2 schématiques et non représentées à l'échelle :
- Figure 1 : schéma d'une demi-coupe méridienne du pneumatique selon l'invention
- Figure 2 : portion de la sculpture du pneumatique selon l'invention

La figure 1 **[Fig 1****]** représente une portion du sommet du pneumatique selon l'invention dans un plan méridien YZ passant par l'axe de rotation YY' du pneumatique. Le pneumatique 1 pour véhicule agricole pour un tracteur de moyenne puissance, comprend une armature de sommet 3 radialement intérieure à une bande de roulement 2 et radialement extérieure à une armature de carcasse 4. L'armature de sommet 3 comprend 3 couches de sommet (31, 32, 33), comprenant chacune des éléments de renforcement textile composés de deux torons de PET, enrobés dans un matériau élastomérique, parallèles entre eux et formant, avec une direction circonférentielle (XX'), un angle A au moins égal à 15° (non représenté) et au plus égal à 45°. L'armature de carcasse 4 comprend une ou plusieurs couches de carcasse comprenant des éléments de renforcement textiles enrobés dans un matériau élastomérique, parallèles entre eux et formant, avec la direction circonférentielle (XX'), un angle au moins égal à 85° et au plus égal à 95°. La bande de roulement 2 comprend des blocs de sculpture 21, ici des blocs continus nommés habituellement barrettes d'une hauteur radiale h au moins égale à 45mm. La bande de roulement a une largeur axiale LT et comprend une partie centrale 23 d'une largeur axiale LT/2 et deux parties 24 axialement extérieures chacune d'une largeur axiale LT/4. Les barrettes ou blocs de sculpture ont une largeur axiale Lba supérieure à 0.8*LT/4.

La figure 2 [Fig 2] représente une portion de la bande de roulement 2 d'un pneumatique pour véhicule agricole. La bande de roulement 2, d'une largeur axiale LT, comprend des blocs de sculpture 21, en l'occurrence des barrettes et des creux 22 permettant une bonne adhérence sur sol meuble. Les blocs de sculpture 21 sur les parties axialement extérieures du pneumatique, ont une largeur axiale Lba supérieure à 80% de LT/4. En roulage, l'épaisseur des barrettes augmentant les sollicitations thermiques, ce type de bande de roulement génère des cycles de compression/extension des renforts des couches de sommet, pour lesquels il convient d'équilibrer particulièrement bien les angles pour pouvoir alléger l'armature de sommet à seulement 3 couches de sommet. Pour résister à l'arrachement, les barrettes ont une épaisseur circonférentielle ep mesurée à mi-hauteur sculpture dans le plan circonférentiel passant au centre de chaque partie axialement extérieure de la bande de roulement, au moins égale à 42mm. Cette épaisseur impacte également les contraintes thermiques sur cette zone.

L'invention a été plus particulièrement mise en oeuvre pour un pneumatique agricole de dimension 650/65R38 NF, à savoir n'entrant pas dans la classification IF ou VF selon le standard ETRTO 2020. Le pneumatique selon l'état de l'art comprend 4 couches de sommet dont les éléments de renforcements sont constitués de deux torons PET d'une masse linéique de 220 g par km, les éléments de renforcement étant disposés à un pas de 1,15 mm. Les angles des éléments de renforcement des couches de travail au niveau du plan circonférentiel médian avec la direction circonférentielle, sont de la couche la plus radialement intérieure à la plus radialement extérieure -25, 25, -25, 25°. La sculpture est composée de barrettes de 60 mm de hauteur radiale, d'une épaisseur circonférentielle ep mesurée au milieu de chaque partie axialement extérieure égale à 74 mm et d'une largeur axiale représentant 51% de la largeur totale de la bande de roulement.

Le pneumatique selon l'invention est identique au témoin excepté qu'il comprend 3 couches de sommet dont les éléments de renforcement sont des câbles constitués de deux torons de PET d'une masse linéique égale à 344 g par km, les éléments de renforcement des couches de travail étant disposés dans les couches de travail selon un pas égal à 1.35 mm. Le toron de PET a une force à la rupture égale à 20 daN, et l'éléments de renforcement a une force à rupture égale à 35 daN. Les angles des éléments de renforcement des couches de travail au niveau du plan circonférentiel médian avec la direction circonférentielle, sont de la plus radialement intérieure à la plus radialement extérieure égaux à -15, 30, -15.

Le pneumatique selon l'invention permet un gain de 5.2 kg, soit 27% sur la masse des couches de sommet et a été testé en endurance. Les inventeurs ont testé l'invention en comparant la durée de vie, du point de vue de l'endurance de l'armature de sommet, des deux pneumatiques pour tracteurs de moyenne puissance. Un roulage sur un volant acier d'un diamètre de 1.7 m, et à une vitesse V égale à 15 km/h a été effectué pour chaque pneumatique, gonflé à une pression P égale à 260 kPa, à savoir la pression nominale augmentée de 1bar et soumis à des paliers de charge égaux à 4047 daN pendant 24h, puis 4856 daN pendant 24 h puis 6475 daN pendant 24 heures et finalement 8094 daN pendant 328 heures. Le pneumatique selon l'invention avec une masse inférieure, a réalisé un nombre équivalent de kilomètres que le pneumatique selon l'état de l'art sans démontrer de défaillance des éléments de renforcement des couches de travail, démontrant l'intérêt de l'invention de réaliser un pneumatique plus léger à endurance équivalente.

## Revendications

1. Pneumatique radial pour véhicule de type agricole, NF (« Normal Flexion »), dont, au sens du standard ETRTO 2020 (« European Tire an Rim Technical Organisation »), l'indice de vitesse est au moins égal à D pour une vitesse maximale égale à 65 km/h, destiné à être monté sur une jante de diamètre au moins égal à 28 pouces, et dont l'indice de charge est au moins égal à 140 et au plus égal à 170, comprenant
- Une bande de roulement destinée à venir en contact avec un sol d'une largeur axiale LT et comprenant une partie centrale (23) d'une largeur axiale LT/2 et deux parties axialement extérieures (24) chacune d'une largeur axiale LT/4,
- Les deux parties axialement extérieures (24) comprenant des blocs de sculpture d'une hauteur radiale au moins égale à 45 mm, ces blocs couvrant au moins 80% de la largeur axiale LT/4 des parties axialement extérieures de la bande de roulement et d'une épaisseur circonférentielle ep circonférentielle au moins égale à 42 mm,
- une armature de sommet radialement intérieure à la bande de roulement, comprenant 3 couches de travail (31, 32, 33), une couche de travail la plus radialement intérieure (33), une couche de travail la plus radialement extérieure (31) et une couche de travail intermédiaire (32), chaque couche de travail comprenant des éléments de renforcement textiles en PET (polyéthylène téréphtalate) parallèles entre eux, enrobés d'un matériau caoutchouteux et formant des angles avec une direction circonférentielle du pneumatique au moins égaux à 12° et au plus égaux à 45°
- les éléments de renforcement des couches de travail ayant une résistance à la rupture en traction au moins égale à 32 daN mesurée selon la norme désignée D885/D885M-10A (2014)
**caractérisé en ce que** les angles (ANT1, ANT3) formés par les éléments de renforcement respectivement de la couche de travail la plus radialement intérieure (33) et de la couche de travail la plus radialement extérieure (31), avec la direction circonférentielle, sont au plus égaux à 20° et de même orientation,
**en ce que** l'angle ANT2 formé par les éléments de renforcement de la couche de travail intermédiaire (32) avec la direction circonférentielle est de signe opposé aux angles ANT1 et ANT3,
**et en ce que** la valeur absolue de l'angle ANT2 est supérieure à 10° plus la valeur absolue de la moyenne des angles ANT1 et ANT3.

2. Pneumatique selon la revendication 1 dans lequel les éléments de renforcement des couches de travail sont constitués de deux torons de PET, un toron étant un assemblage de fibres élémentaires.

3. Pneumatique selon la revendication 2 dans lequel chaque toron de PET des éléments de renforcement des couches de travail a une masse linéique au moins égale à 320 g par km.

4. Pneumatique selon l'une quelconque des revendications 1 à 3 dans lequel les éléments de renforcement des 3 couches de travail sont des câbles constitués de deux torons de PET d'une masse linéique comprise entre 320 et 360 g par km, et espacés selon un pas compris entre 1.2 mm et 1,5 mm.

5. Pneumatique selon la revendication 4 dans lequel la valeur absolue des angles ANT1 et ANT3 est comprise entre 13 et 17° et la valeur absolue de l'angle ANT2 est comprise entre 27° et 33°.

6. Pneumatique selon la revendication 5 dans lequel la valeur absolue des angles ANT1 et ANT3 est comprise entre 14,5° et 15,5° et la valeur absolue de l'angle ANT2 est comprise entre 29,5° et 30,5°.

## Patentansprüche

1. Radialreifen für ein landwirtschaftliches Fahrzeug, NF ("Normal Flexion"), dessen Geschwindigkeitsindex gemäß ETRTO-Standard 2020 ("European Tire an Rim Technical Organisation") mindestens D für eine Höchstgeschwindigkeit von 65 km/h beträgt, der dazu bestimmt ist, auf eine Felge mit einem Durchmesser von mindestens 28 Zoll montiert zu werden und dessen Lastindex mindestens 140 und höchstens 170 beträgt, umfassend
- Einen Laufstreifen mit einer axialen Breite LT, der dazu bestimmt ist, mit einem Boden in Kontakt zu kommen, und einen mittleren Teil (23) mit einer axialen Breite LT/2 und zwei axial äußere Teile (24) mit jeweils einer axialen Breite LT/4 umfasst,
- Wobei die beiden axial äußeren Teile (24) Profilblöcke mit einer radialen Höhe von mindestens 45 mm umfassen, wobei diese Blöcke mindestens 80 % der axialen Breite LT/4 der axial äußeren Teile des Laufstreifens bedecken, und mit einer umfänglichen Dicke von mindestens 42 mm,
- eine Gürtelverstärkung radial innerhalb des Laufstreifens, die 3 Arbeitslagen (31, 32, 33) umfasst, eine radial innerste Arbeitslage (33), eine radial äußerste Arbeitslage (31) und eine Zwischenarbeitslage (32), wobei jede Arbeitslage zueinander parallele textile Festigkeitsträgerelemente aus PET (Polyethylenterephthalat) umfasst, die in ein Kautschukmaterial eingebettet sind und Winkel mit einer Umfangsrichtung des Reifens von mindestens 12° und höchstens 45° bilden
- wobei die Festigkeitsträgerelemente der Arbeitslagen eine Zugfestigkeit von mindestens 32 daN, gemessen nach der Norm D885/D885M - 10A (2014), haben **dadurch gekennzeichnet, dass** die Winkel (ANT1, ANT3), die von den Festigkeitsträgerelementen der radial innersten Arbeitslage (33) und der radial äußersten Arbeitslage (31) mit der Umfangsrichtung gebildet werden, höchstens 20° betragen und die gleiche Ausrichtung aufweisen,
und dass der Winkel ANT2, der von den Festigkeitsträgerelementen der Zwischenarbeitslage (32) mit der Umfangsrichtung gebildet wird, das entgegengesetzte Vorzeichen zu den Winkeln ANT1 und ANT3 aufweist,
und dass der Absolutwert des Winkels ANT2 größer als 10° zuzüglich des Absolutwerts des Mittelwerts der Winkel ANT1 und ANT3 ist.

2. Reifen nach Anspruch 1, wobei die Festigkeitsträgerelemente der Arbeitslagen aus zwei PET-Litzen bestehen, wobei eine Litze eine Anordnung aus elementaren Fasern ist.

3. Reifen nach Anspruch 2, wobei jede PET-Litze der Festigkeitsträgerelemente der Arbeitslagen eine längenbezogene Masse von mindestens 320 g je km aufweist.

4. Reifen nach einem der Ansprüche 1 bis 3, wobei die Festigkeitsträgerelemente der 3 Arbeitslagen Seile sind, die aus zwei PET-Litzen mit einer längenbezogenen Masse zwischen 320 und 360 g je km bestehen, und gemäß einer Schrittweite zwischen 1,2 mm und 1,5 mm beabstandet sind.

5. Reifen nach Anspruch 4, wobei der Absolutwert der Winkel ANT1 und ANT3 zwischen 13 und 17° beträgt und der Absolutwert des Winkels ANT2 zwischen 27° und 33° beträgt.

6. Reifen nach Anspruch 5, wobei der Absolutwert der Winkel ANT1 und ANT3 zwischen 14,5° und 15,5° beträgt und der Absolutwert des Winkels ANT2 zwischen 29,5° und 30,5° beträgt.

## Claims

1. Radial tyre for a vehicle of the agricultural and NF ("Normal Flexion") type, which, within the meaning of the 2020 ETRTO ("European Tyre and Rim Technical Organization") standard, has a speed index at least equal to D for a maximum speed equal to 65 km/h, which tyre is intended to be mounted on a rim with a diameter at least equal to 28 inches, and has a load index at least equal to 140 and at most equal to 170, comprising:
- a tread intended to come into contact with the ground, which tread has an axial width LT and comprises a central portion (23) with an axial width LT/2 and two axially outer portions (24), each with an axial width LT/4,
- the two axially outer portions (24) comprising tread pattern blocks with a radial height at least equal to 45 mm, these blocks covering at least 80% of the axial width LT/4 of the axially outer portions of the tread and having a circumferential thickness ep at least equal to 42 mm,
- a crown reinforcement radially on the inside of the tread, comprising 3 working layers (31, 32, 33): a radially innermost working layer (33), a radially outermost working layer (31) and an intermediate working layer (32), each working layer comprising mutually parallel textile reinforcing elements made of PET (polyethylene terephthalate), which are coated in a rubber material and form angles at least equal to 12° and at most equal to 45° with the circumferential direction of the tyre,
- the reinforcing elements of the working layers having an ultimate tensile strength at least equal to 32 daN, measured according to the standard denoted D885/D885M - 10A (2014),
**characterized in that** the angles (ANT1, ANT3) respectively formed by the reinforcing elements of the radially innermost working layer (33) and the radially outermost working layer (31) with the circumferential direction are at most equal to 20° and have the same orientation,
**in that** the angle ANT2 formed by the reinforcing elements of the intermediate working layer (32) with the circumferential direction has an opposite sign to the angles ANTI and ANT3,
**and in that** the absolute value of the angle ANT2 is greater than 10° plus the absolute value of the average of the angles ANT1 and ANT3.

2. Tyre according to Claim 1, wherein the reinforcing elements of the working layers consist of two PET strands, one strand being an assembly of elementary fibres.

3. Tyre according to Claim 2, wherein each PET strand of the reinforcing elements of the working layers has a linear density at least equal to 320 g per km.

4. Tyre according to any one of Claims 1 to 3, wherein the reinforcing elements of the 3 working layers are cords which consist of two PET strands with a linear density of between 320 and 360 g per km and are spaced apart at a pitch of between 1.2 mm and 1.5 mm.

5. Tyre according to Claim 4, wherein the absolute value of the angles ANT1 and ANT3 is between 13° and 17° and the absolute value of the angle ANT2 is between 27° and 33°.

6. Tyre according to Claim 5, wherein the absolute value of the angles ANT1 and ANT3 is between 14.5° and 15.5° and the absolute value of the angle ANT2 is between 29.5° and 30.5°.
